# EUROPÄISCHE PATENTSCHRIFT

(11) **EP 0 711 792 B1**
(45) Veröffentlichungstag und Bekanntmachung des Hinweises auf die Patenterteilung: **10.03.1999**
(21) Anmeldenummer: 95117030.7
(22) Anmeldetag: 28.10.1995
(51) Int. Cl.: C08G 12/40, D21H 17/51

(54) **Melaminharze**
Melamine resins
Résines de mélamine

(30) Priorität: 05.11.1994 DE 4439595
(43) Veröffentlichungstag der Anmeldung: 15.05.1996
(73) Patentinhaber: BASF Aktiengesellschaft, 67063 Ludwigshafen (DE)
(72) Erfinder: Wittmann, Otto, D-67227 Frankenthal (DE); Kirchgässner, Uwe, Dr., D-67227 Frankenthal (DE); Pohl, Hans Henning, Dr., D-67433 Neustadt (DE); Utecht, Jens, Dr., D-68809 Neulussheim (DE); Decher, Jakob, D-67240 Bobenheim-Roxheim (DE); Jäckh, Christof, Dr., D-69120 Heidelberg (DE)

(56) Entgegenhaltungen:
- US-A- 2 863 842
- US-A- 2 949 396

## Beschreibung

Die vorliegende Erfindung betrifft Melaminharze, die zur Imprägnierung von Papier geeignet sind aus
a) Melamin (Komponente a)
b) pro Mol Melamin 1,45 bis 1,65 mol Formaldehyd (Komponente b)und
c) pro Mol Melamin 0,05 bis 0,1 mol eines Alkalidisulfits oder einer, bezogen auf die Schwefelmenge, äquivalenten Menge eines Alkalisulfits oder Alkalihydrogensulfits, (Komponente c),
die als 55 gew.-%ige wäßrige Lösung bei einer Temperatur von 25°C und einem Schergefälle von 100 s⁻¹ eine Viskosität von 50 bis 200 mPa·s aufweisen.

Weiterhin betrifft die Erfindung Verfahren zu deren Herstellung, deren Verwendung zur Imprägnierung von Papieren, Melaminharz-Imprägnate, die unter Verwendung der Melaminharze hergestellt wurden sowie mit diesen Melaminharz-Imprägnaten beschichtete Werkstoffe.

Melaminharze aus Melamin und Formaldehyd sind allgemein bekannt, beispielsweise aus Kunststoff-Handbuch, 2. Auflage, 1988, Band 10, S. 41 bis 49.

Häufig stellt man aus ihnen durch Imprägnierung von Papier Melaminharz-Imprägnate her, die u.a. zur Beschichtung von Holzwerkstoffen in der Möbelindustrie Verwendung finden.

Durch das Beschichten mit Melaminharz-Imprägnaten erhalten solche Holzwerkstoffe eine Oberfläche, die eine höhere Widerstandsfähigkeit gegenüber mechanischer Beanspruchung aufweist und die relativ unempfindlich gegenüber Chemikalien und Feuchtigkeit ist.

Möbelteile, bei denen die mechanische Beanspruchung sehr hoch ist, z.B. Arbeitsplatten von Küchenmöbeln, werden geeigneterweise aus Holzwerkstoffen hergestellt, die mit Melaminharz-Imprägnaten beklebt sind, die aus mehreren Papierlagen aufgebaut sind. Zur Herstellung von Möbelteilen, die weniger stark beansprucht werden, reicht es im allgemeinen aus, die Holzwerkstoffe mit einlagigen Melaminharz-Imprägnaten zu beschichten. Die Beschichtung erfolgt dabei üblicherweise nach dem s.g. Kurztaktverfahren, bei dem die Holzwerkstoffe in Kurztaktpressen mit Preßzeiten von ca. 10 bis 60 sec und Drücken von 15 bis 30 bar mit den Melaminharz-Imprägnaten verpreßt werden.

Von der Möbelindustrie werden insbesondere Melaminharze gewünscht, welche die wirtschaftliche Herstellung von hochwertigen Melaminharz-Imprägnaten erlauben. Die Melaminharze sollen beim Imprägnieren des Papiers sowohl rasch und gleichmäßig eindiffundieren als auch einen hohen Feststoffgehalt aufweisen, damit für das Trocknen des Papiers möglichst wenig Energie benötigt wird. Außerdem sollen die Melaminharze auch nach längerer Lagerung gut "waschbar" sein, d.h. sie sollen beim Verdünnen mit Wasser keine klebrigen Klumpen bilden. Eine gute Waschbarkeit ist deshalb wichtig, weil sie die leichte Reinigung von Transportbehältern und Verarbeitungsmaschinen ermöglicht.

Weiterhin sollen die aus den Melaminharzen hergestellten Imprägnate eine gewisse Elastizität aufweisen, damit sich nach dem Kurztaktverfahren auch strukturierte Flächen von Holzwerkstoffteilen beschichten lassen, ohne daß es zu einer Rißbildung in den aufgepreßten Imprägnate kommt. Außerdem soll die Elastizität groß genug sein, damit Quellungs- und Schwundvorgänge im Holzwerkstoff, wie sie beispielsweise bei der Veränderung des Raumklimas auftreten können, ebenfalls nicht zu einer Oberflächenrißbildung führen. Neben einer solchen Rißbeständigkeit sollen die aufgepreßten Melaminharz-Imprägnate zusätzlich gegen Feuchtigkeit und insbesondere Wasserdampf unempfindlich sein und einen hohen Oberflächenglanz aufweisen.

Melaminharze für den genannten Zweck sind in der DE-A 26 37 424 beschrieben. Es wird zu deren Herstellung empfohlen, Melamin und Formaldehyd im Molverhältnis 1:1,5 bis 1:3,5 zu kondensieren und vor, während oder nach der Kondensation 0,5 bis 15 Gew.-% £-Caprolactam und Thioharnstoff sowie 0,25 bis 0,5 Gew.-% eines Hydrogensulfits oder Sulfits zuzusetzen.

Nachteilig an diesen Harzen ist, daß deren Verarbeitung aus arbeitshygienischer Sicht problematisch ist, da beim Trocknen der imprägnierten Papiere und bei deren Aufpressen auf die Holzwerkstoffe in erheblichem Umfang Substanzen, die die Luft verunreinigen, freigesetzt werden.

Aus der DE-A 32 16 927 sind wäßrige Lösungen von Melaminharzen bekannt, die zu mindestens 80 Gew.-% aus Melamin und Formaldehyd im Molverhältnis 1:1,5 bis 1:4 aufgebaut sind und die 1 bis 20 Gew.-%, bezogen auf den Feststoffgehalt des Melaminharzes, eines Alkalidisulfits enthalten.

Beispiel 1 lehrt die Herstellung eines Melaminharzes mit einer Viskosität von 3500 mPa·s aus Melamin, pro Mol Melamin 2,25 mol Formaldehyd und 0,085 mol Natriumdisulfit. Es wird weiterhin empfohlen, die bei der Kondensation des Melamins und des Formaldehyds zu den Melaminharzen in wäßriger Lösung auftretenden Viskositäten zu überwachen und in einer Kurve als Funktion der Reaktionszeit aufzutragen. Die Reaktionszeit sollte wenigstens solange gewählt werden, daß in der Kurve der ersten Ableitung dieser Funktion eine Knickstelle auftritt. Die Nacharbeitung dieser Anweisung zeigte, daß man hiernach Melaminharze erhält, deren Viskosität mehr als 10 000 mPa·s beträgt.

Diese Melaminharze werden für die Herstellung von Fäden und Fasern empfohlen. Zur Herstellung von Imprägnaten sind die Melaminharze ungeeignet, da sie nicht gleichmäßig in das zu imprägnierende Material eindiffundieren.

Als Folge davon weisen die getrockneten Imprägnate eine ungleichmäßige Oberfläche und es treten Qualitätsschwankungen in den mechanischen Eigenschaften auf.

Die DE-A 2 502 168 beschreibt Melaminharze aus Melamin und pro Mol Melamin 1,3 bis 6 mol Formaldehyd sowie 0,1 mol eines Alkalisulfits oder -bisulfits. Nach der Lehre der Beispiele beträgt das Molverhältnis Melamin zu Formaldehyd 1:2,1 (Beispiel 2). Melaminharze, bei denen das Molverhältnis Melamin zu Formaldehyd kleiner als 1:1,7 ist, sind zwar für die Herstellung von Imprägnat für die Beschichtung von Holzwerkstoffen geeignet, jedoch läßt die Rißbeständigkeit noch zu wünschen übrig.

Aufgabe der vorliegenden Erfindung war es, Melaminharze zu finden, welche die genannten Mängel nicht aufweisen und mit denen sich insbesondere beschichtete Holzwerkstoffe herstellen lassen, deren Oberflächen rißbeständig und gegen Wasserdampf unempfindlich sind.

Demgemäß wurden die eingangs definierten Melaminharze gefunden.

Die Melaminharze weisen als wäßrige Lösung mit einem Feststoffgehalt von 55 Gew.-% bei einer Temperatur von 25°C und einem Schergefälle von 100 sec⁻¹ eine Viskosität von 50 bis 200, bevorzugt von 50 bis 100 mPa·s auf. Als Feststoffgehalt wird hier der Trockenrückstand bezeichnet, der ermittelt wird, indem 1 bis 2 g des Melaminharzes auf ein Trockenblech ausgegossen, zwei Stunden in einem Umluft-Trockenschrank bei 120°C getrocknet und nach dem Abkühlen auf Raumtemperatur zurückgewogen werden.

Als Ausgangsverbindungen zur Herstellung der Melaminharze werden
- Melamin (Komponente a)
- pro Mol Melamin 1,45 bis 1,70, Formaldehyd (Komponente b) und
- pro Mol Melamin 0,05 bis 0,1 Mol, eines Alkalidisulfits oder einer, bezogen auf die Schwefelmenge, äquivalenten Menge (d.h. 1 mol eines Alkalidisulfits entspricht 2 mol eines Alkalisulfits bzw. -hydrogensulfits) eines Alkalisulfits oder Alkalihydrogensulfits (Komponente c) eingesetzt.

Das Melamin (Komponente a) wird üblicherweise in fester Form eingesetzt.

Der Formaldehyd (Komponente b) wird bevorzugt in Form einer 30 bis 50 gew.-%igen wäßrigen Lösung oder in Form von Paraformaldehyd eingesetzt.

Als Komponente (c), den Alkalidisulfiten, -sulfiten und hydrogensulfiten, kommen vor allem die Natrium- und Kaliumverbindungen in Betracht. Selbstverständlich können auch Gemische aus Disulfit, Sulfit und/oder Hydrogensulfit eingesetzt werden.

Die Herstellung der Melaminharze erfolgt vorzugsweise nach den allgemein üblichen Verfahren, die beispielsweise aus Ullmanns Encyklopädie der technischen Chemie, 4. Auflage, Band 7, S. 403 bis 422 bekannt sind.

Vorzugsweise erfolgt die Umsetzung der Ausgangsverbindungen zu den Melaminharzen in zwei Stufen: In der ersten Stufe wird eine zu Beginn der Umsetzung als Suspension vorliegende wäßrige Mischung aus Komponente (a) und (b) wenigstens solange umgesetzt, bis als Umsetzungsprodukt eine Lösung mit einer Trübungstemperatur von 40 bis 60°C entstanden ist, wobei der Wassergehalt, bezogen auf die Gesamtmenge der Mischungskomponenten, bevorzugt 30 bis 60 Gew.-% beträgt.

Die Trübungstemperatur wird ermittelt, indem man das Umsetzungsprodukt auf einen Feststoffgehalt von 12 Gew. -% verdünnt, solange erwärmt, bis eine klare Lösung entsteht und die Temperatur mißt, bei der sich die klare Lösung beim Abkühlen eintrübt. Diese Lösungen, die nach der Umsetzung gemäß Stufe 1 erhalten werden, weisen als 55 gew. -%ige wäßrige Lösungen bei einer Temperatur von 25°C und einem Schergefälle von 100 s⁻¹ eine Viskosität unterhalb von 200 mPa·s auf.

In der zweiten Stufe vermischt man die in der ersten Stufe erhaltene Lösung mit der Komponente (c) und setzt die Mischung, falls sie eine Viskosität von weniger als 50 mPa·s aufweist, weiter um, bis die Viskosität den gewünschten Zielwert im Bereich von 50 bis 200 mPa·s erreicht hat.

Sofern sich eine weitere Umsetzung der Mischung aus der Lösung gemäß Stufe 1 und Komponente (c) erübrigt, weil die Viskosität der Mischung bereits im gewünschten Bereich liegt, ist es besonders vorteilhaft, die Komponente (c) unmittelbar im Anschluß an Stufe 1 zuzusetzen. Nach einer weniger bevorzugten Verfahrensvariante, nach der jedoch noch Produkte mit einem befriedigenden Eigenschaftniveau erhalten werden, erfolgt der Zusatz der Komponente (c) zu einem späteren Zeitpunkt, beispielsweise unmittelbar vor der Verarbeitung der Melaminharze.

Die Umsetzung der Ausgangsverbindungen zum Melaminharz erfolgt üblicherweise bei einem pH-Wert von 7 bis 10, bevorzugt von 8,5 bis 9,2 und einer Reaktionstemperatur von 60 bis 110, bevorzugt von 90 bis 100°C. Die Umsetzung kann beendet werden, indem man die Reaktionsmischung auf Temperaturen unterhalb 50°C, bevorzugt auf 20 bis 30°C abkühlt. Es wird im allgemeinen bei Normaldruck gearbeitet.

Im allgemeinen werden wäßrige Melaminharze gewünscht, besonders solche mit einem Feststoffgehalt von 40 bis 60 Gew.-%. Sofern die Melaminharze nicht schon unmittelbar nach ihrer Herstellung mit dem gewünschten Feststoffgehalt vorliegen, ist es möglich, den Feststoffgehalt durch Abdestillieren von Wasser, vorzugsweise im Vakuum, oder durch Vermischung mit Wasser zu verändern. Weiterhin ist es möglich, die wäßrigen Lösungen der Melaminharze durch Sprühtrocknung zu Pulvern weiterzuverarbeiten. Diese Pulver sind leicht mit üblichen Methoden, z.B. Einrühren in Wasser, redispergierbar.

Die Melaminharze eignen sich vor allem zur Herstellung von Melaminharz-Imprägnaten.

Zu deren Herstellung werden Papiere, sogenannte Tränkpapiere, z.B. Dekor- und Kernlagenpapiere (Natronkraftpapiere), mit den Melaminharzen imprägniert. Dabei kommen die Melaminharze in Form einer 40 bis 70 gew.-%igen wäßrigen Lösung zur Anwendung, der üblicherweise ein Härter zugesetzt wird.

Als Härter kommen Bronstedt-Säuren wie organische Sulfon- und Carbonsäuren sowie deren Anhydride, z.B. Maleinsäure, Maleinsäureanhydrid und Ameisensäure, Ammoniumverbindungen, z.B. Ammoniumsulfat, Ammoniumsulfit, Ammoniumnitrat, Ethanolaminhydrochlorid, Dimethylethanolammoniumsulfit sowie Härterkombinationen wie Morpholin/p-Toluolsulfonsäure in Betracht.

Die Härter können in Mengen von 0,1 bis 2,5 Gew.-%, bezogen auf das wäßrige Tränkharz, zugegeben werden. Dem Fachmann ist bekannt, daß die Härterdosierung den jeweiligen anwendungstechnischen Erfordernissen angepaßt werden kann, wobei die Reaktivität der Tränkharz/Härter-Gemische z.B. über die Messung der Trübungszeiten und Gelierzeiten entsprechend eingestellt werden kann.

Den Imprägnierflotten können zusätzlich Hilfsmittel wie Netzmittel zugesetzt werden. Als Netzmittel eignen sich zum Beispiel ethoxylierte Fettalkohole oder Alkylphenolethoxylate, die in Mengen von 0,2 bis 0,6 Gew.-%, bezogen auf die Harzlösung, zugesetzt werden können.

Es erübrigt sich im allgemeinen, zur Verbesserung der anwendungstechnischen Eigenschaften der Melaminharze, z.B. der Reaktivität und der Flexibilität der Papierfolien, vor, während oder nach der Herstellung in wirksamen Mengen bekannte Modifizierungsmittel wie ε-Caprolactam und andere Carbonsäureamide (vgl. deutsche Auslegeschrift 1 595 368), Sulfonsäureamide wie Toluolsulfonsäureamid, Sacchariden (DE-A-21 44 534) sowie Thioharnstoff zuzusetzen.

Die Art und Weise, wie die Imprägnierflotten zu Melaminharz-Imprägnaten weiterverarbeitet werden und wie die Beschichtung der Holzwerkstoffe mit diesen Imprägnaten erfolgt, ist dem Fachmann bekannt.

Verfahren, wie die Imprägnierflotten zu Melaminharz-Imprägnaten, die aus mehreren übereinanderliegenden Papieren aufgebaut sind, z.B. s.g. Hochdruck-Laminaten (HPL) und kontinuierlich hergestellten Laminaten (CPL) weiterverarbeitet werden können, sind beispielsweise in der DE-A-41 39 961 und der DE-A-42 40 982 beschrieben.

Diese Laminate werden üblicherweise mit Klebstoffen auf Holzwerkstoffe aufgeleimt.

Die Melaminharze eignen sich besonders für die Herstellung von Holzwerkstoffen, die mit aus einer Papierlage bestehenden Imprägnaten beschichtet sind.

Die Herstellung dieser Oberflächenbeschichtung erfolgt üblicherweise nach dem folgenden Verfahren: Dekorpapiere mit Flächengewichten im Bereich von 60 bis 150 g/m² werden mit 120 bis 150 Gew.-%, bezogen auf das Papiergewicht, der Imprägnierflotte, bei Raumtemperatur imprägniert. Das imprägnierte Papier wird anschließend bis auf einen Restfeuchtegehalt von ca. 5 bis 7 Gew.-% getrocknet. Die auf diese Weise hergestellten Imprägnate werden anschließend nach dem Kurztaktverfahren bei Temperaturen von 150 bis 210°C und Drücken von 15 bis 30 bar während einer Preßzeit von 10 bis 60 s mit dem Holzwerkstoff verpreßt.

Die erfindungsgemäßen Melaminharze zeichnen sich insbesondere dadurch aus, daß mit ihnen auf wirtschaftliche Art und Weise hochwertige Melaminharz-Folien hergestellt werden können. Durch Aufpressen dieser Folien auf Werkstoffe aus unterschiedlichen Materialien wie Holz, Kunststoffe, Faserverbundstoffe oder insbesondere Holzwerkstoffe, z.B. Sperrholz, Holzfaserplatten und insbesondere Spanplatten erhalten diese eine Oberfläche, die rißbeständig, glänzend und unempfindlich gegen Wasserdampf ist.

### Beispiele

### Herstellung der Melaminharze

Eine Suspension bestehend aus 40 Gew.-% Wasser sowie zu insgesamt 60 Gew.-% aus Formaldehyd und Melamin, wobei das Molverhältnis Formaldehyd: Melamin jeweils wie in Tabelle 1 angegeben betrug, wurde auf 100°C erhitzt. Der pH-Wert der Reaktionsmischung wurde durch Zugabe von Natronlauge auf einen pH-Wert von 8,6 bis 8,8 eingestellt. Die Reaktionsmischung wurde solange bei der genannten Temperatur umgesetzt, bis die entstandene Lösung eine Trübungstemperatur von 50°C aufwies, was ca. 120 min dauerte und anschließend auf Raumtemperatur abgekühlt. Während des Abkühlens wurden bei ca. 70 bis 90°C Natriumdisulfit in der jeweils in Tabelle 1 angegebenen Menge zugegeben.

Bei der Ermittlung der Trübungstemperatur werden die Lösungen mit Wasser auf 12 Gew.-% verdünnt, auf 100°C erwärmt und anschließend mit einer Geschwindigkeit von 5°C pro Minute unter Rühren abgekühlt. Als Trübungstemperatur gilt die Temperatur, bei der sich die in einer Schichtdicke von 1 cm für das Auge klare Lösung einzutrüben beginnt.

Die Eigenschaften der so erhaltenen Melaminharze sind in Tabelle 1 wiedergegeben.

| Bsp. Nr. | 1 | 2 | 3 | 4(V) | 5(V) | 6(V) | 7(V) | 8(V) |
|---|---|---|---|---|---|---|---|---|
| Molverh. F:M | 1,55 | 1,55 | 1,66 | 1,55 | 1,66 | 1,80 | 1,30 | 1,40 |
| Molverh. S:M | 0,05 | 0,08 | 0,05 | 0,00 | 0,00 | 0,05 | 0,05 | 0,05 |
| Viskosität [mPa·s] | 100 | 100 | 100 | 100 | 100 | 115 | - | - |
| F = Formaldehyd M = Melamin S = Natriumdisulfit | | | | | | | | |

Bei den Beispielen 7 (V) und 8 (V) konnten bei Reaktionszeiten von 2 h keine klaren Lösungen erhalten werden. Sie enthielten nach wie vor festes Melamin. Daran änderte sich auch nichts, als die Reaktionszeit auf 4 h verlängert wurde. Die so erhaltenen Suspensionen aus wäßrigem Melaminharz und festem Melamin erwiesen sich für die Herstellung von Imprägnaten unbrauchbar.

Herstellung der Melaminharz-Filme und mit diesen Filme beschichteten Spanplatten nach dem Kurztaktverfahren:

Zur Herstellung der Imprägnierflotte wurde das jeweilige Harz mit Wasser auf einen Feststoffgehalt von 55 Gew.-% eingestellt und mit 0,3 Gew.-%, bezogen auf die Harzlösung, eines handelsüblichen Alkylphenolethoxylat-Netzmittels versetzt. Mit einer 70 gew.-%igen wäßrigen Lösung eines Härters (Salz aus p-Toluolsulfonsäure und Morpholin) wurde eine Trübungszeit von ca. 5 min eingestellt.

Es wurden Dekorpapiere mit einem Flächengewicht von 80 g/m² imprägniert. Der Harzauftrag betrug ca. 120 %, der Restfeuchte-Gehalt wurde auf etwa 6,5 % eingestellt. Die so hergestellten Filme wurden nach dem Kurztaktverfahren mit 20 bar bei 190°C innerhalb von 35 s auf übliche beschichtungsfähige Spanplatten gepreßt.

### Anwendungstechnische Prüfung der beschichteten Spanplatten:

Die Prüfergebnisse sind in der nachstehenden Tabelle 2 wiedergegeben.

| Bsp. Nr. | 1 | 2 | 3 | 4(V) | 5(V) | 6(V) |
|---|---|---|---|---|---|---|
| Härtung | 1-2 | 2 | 1-2 | 1-2 | 1 | 1-2 |
| Glanz [%] | 66 | 65 | 78 | 34 | 50 | 77 |
| Geschlossenheit | 2 | 2-3 | 2-3 | 4 | 3 | 3 |
| Rißbeständigkeit | 0 | 0 | 1 | 6 | 6 | 5 |
| Wasserdampfbestän-digkeit (Glanzverlust [%]) | 8 | 10 | 5 | 5 | 5 | 4 |

### Härtung

Die Güte der Härtung wird durch 16-stündige Einwirkung einer 0,2 n Salzsäure, die mit 0,004 Gew.-% Rhodamin B-Lösung angefärbt ist, auf die beschichtete Spanplatte ermittelt. Bei guter Härtung wird die Oberfläche nicht durch die Säure angegriffen. Die Stärke des Angriffs läßt sich anhand der Stärke der Rotfärbung beurteilen.
Beurteilung
- 0 =: kein Angriff
- 1 =: schwache Rosafärbung
- 2 =: deutliche Rotfärbung
- 3 =: starke Rotfärbung
- 4 =: starke Rotfärbung mit leichter Oberflächenquellung
- 5 =: starke Rotfärbung mit starker Oberflächenquellung
- 6 =: zerstörte Oberfläche

### Glanz

Die Glanzmessung erfolgt nach DIN 67 580 durch Reflexionsmessung eines Lichtstrahls im Einfallswinkel von 20°. Der Glanz ist umso besser, je höher der in % angegebene Anteil des reflektierten Lichtes ist.

### Geschlossenheit

Die Geschlossenheit oder Porigkeit der beschichteten Spanplatten-Oberfläche dient zur Beurteilung der Schmutzempfindlichkeit. Die zu prüfende Oberfläche wird mit schwarzer Schuhcreme eingerieben und anschließend mit einem Lappen wieder gereinigt. Die in den Poren verbleibende Schuhcreme ermöglicht eine Beurteilung der Geschlossenheit der Oberflächen.

Die Beurteilung der Oberflächengeschlossenheit erfolgt in folgenden Stufen:
- 0 =: porenfrei
- 1 =: vereinzelte Poren
- 2 =: wenige Poren
- 3 =: häufige Poren
- 4 =: viele offene Stellen
- 5 =: sehr viele offene Stellen
- 6 =: keine Geschlossenheit.

### Rißbeständigkeit

Die Rißbeständigkeit einer Oberfläche wird nach DIN 53 799 bestimmt. Die beschichtete Spanplatte wird über einer Zeit von 24 h bei 70°C im Umlufttrockenschrank gelagert. Durch den Trocknungsprozeß treten Schrumpfspannungen auf, die in den Oberflächen zu einer Rißbildung führen. Eine Verschärfung des Tests kann durch Erhöhung der Trocknungstemperatur oder durch Anbohren der Oberfläche (Kerbwirkung) erreicht werden. Die Beurteilung der Rißbildung erfolgt nach folgender Skala:
- 0 =: keine Risse
- 1 =: vereinzelte kleine Risse
- 2 =: wenige Risse
- 3 =: mäßige Risse
- 4 =: häufige Risse
- 5 =: viele Risse
- 6 =: totale Rißbildung.

### Wasserdampfbeständigkeit

Die Wasserdampfbeständigkeit nach DIN 53 799 wird ermittelt, indem die durch die Wasserdampfeinwirkung hervorgerufene Beschädigung der Oberfläche als Glanzverlust in %, bezogen auf den Meßwert vor der Wasserdampfbehandlung bestimmt wird.

## Patentansprüche

1. Melaminharze, die zur Imprägnierung von Papier geeignet sind, aus
a) Melamin (Komponente a)
b) pro Mol Melamin 1,45 bis 1,70 mol Formaldehyd (Komponente b) und
c) pro Mol Melamin 0,05 bis 0,1 mol eines Alkalidisulfits oder einer, bezogen auf die Schwefelmenge, äquivalenten Menge eines Alkalisulfits oder Alkalihydrogensulfits (Komponente c),
die als 55 gew.-%ige wäßrige Lösung bei einer Temperatur von 25°C und einem Schergefälle von 100 s⁻¹ eine Viskosität von 50 bis 200 mPa·s aufweisen.

2. Melaminharze nach Anspruch 1, erhältlich, indem man
I) eine Mischung von Komponente (a) und (b) in Wasser wenigstens solange umsetzt, bis eine Lösung mit einer Trübungstemperatur von 40 bis 60°C entstanden ist, und
II) die in Stufe 1 erhaltene Lösung mit Komponente (c) vermischt und falls die Mischung eine Viskosität von weniger als 50 mPa·s aufweist, diese bis zu einer Viskosität von 50 bis 200 mPa·s weiter umsetzt,
wobei die Umsetzung in Stufe (I) und Stufe (II) bei einem pH-Wert von 7 bis 10 und einer Reaktionstemperatur von 60 bis 110°C erfolgt und sich die Angaben zur Trübungstemperatur auf einen Feststoffgehalt von 12 Gew. -% und die Angaben zur Viskosität auf einen Feststoffgehalt von 55 Gew.-%, eine Temperatur von 25°C und ein Schergefälle von 100 s⁻¹ beziehen.

3. Verfahren zur Herstellung von Melaminharzen gemäß Anspruch 1 oder 2, dadurch gekennzeichnet, daß man
I) eine Mischung von Komponente (a) und (b) in Wasser wenigstens solange umsetzt, bis eine Lösung mit einer Trübungstemperatur von 40 bis 60°C entstanden ist, und
II) die in Stufe 1 erhaltene Lösung mit Komponente (c) vermischt und falls die Mischung eine Viskosität von weniger als 50 mPa·s aufweist, diese bis zu einer Viskosität von 50 bis 200 mPa·s weiter umsetzt,
wobei die Umsetzung in Stufe (I) und Stufe (II) bei einem pH-Wert von 7 bis 10 und einer Reaktionstemperatur von 60 bis 110°C erfolgt und sich die Angaben zur Trübungstemperatur auf einen Feststoffgehalt von 12 Gew.-% -% und die Angaben zur Viskosität auf einen Feststoffgehalt von 55 Gew.-%, eine Temperatur von 25°C und ein Schergefälle von 100 s⁻¹ beziehen.

4. Verwendung der Melaminharze gemäß den Ansprüchen 1 bis 3 zur Imprägnierung von Papier.

5. Melaminharz-Imprägnate, die mit den Melaminharzen gemäß Anspruch 1 bis 3 getränkt sind.

6. Werkstoffe, die mit den Melaminharz-Imprägnate gemäß Anspruch 5 beschichtet sind.

## Claims

1. A melamine resin which is suitable for impregnating paper, comprising
a) melamine (component a)
b) from 1.45 to 1.70 mol of formaldehyde (component b) per mol of melamine and
c) from 0.05 to 0.1 mol of an alkali metal disulfite or of an equivalent amount, based on the amount of sulfur, of an alkali metal sulfite or alkali metal hydrogen sulfite (component c) per mol of melamine
and, in the form of 55% strength by weight aqueous solution at 25°C and a shear gradient of 100 s⁻¹, has a viscosity of from 50 to 200 mPa·s.

2. A melamine resin as claimed in claim 1, obtainable by
I) reacting a mixture of components (a) and (b) in water at least until a solution having a turbidity temperature of from 40 to 60°C has formed and
II) mixing the solution obtained in stage I with component (c) and, if the mixture has a viscosity of less than 50 mPa·s, reacting said mixture further to a viscosity of from 50 to 200 mPa·s,
the reaction in stage (I) and stage (II) being carried out at a pH of from 7 to 10 and a reaction temperature of from 60 to 110°C and the turbidity temperature data being based on a solids content of 12% by weight and the viscosity data being based on a solids content of 55% by weight, a temperature of 25°C and a shear gradient of 100 s⁻¹.

3. A process for the preparation of a melamine resin as claimed in claim 1 or 2, wherein
I) a mixture of components (a) and (b) in water is reacted at least until a solution having a turbidity temperature of from 40 to 60°C has formed and
II) the solution obtained in stage I is mixed with component (c) and, if the mixture has a viscosity of less than 50 mPa·s, said mixture is further reacted to a viscosity of from 50 to 200 mPa·s,
the reaction in stage (I) and stage (II) being carried out at a pH of from 7 to 10 and a reaction temperature of from 60 to 110°C and the turbidity temperature data being based on a solids content of 12% by weight and the viscosity data being based on a solids content of 55% by weight, a temperature of 25°C and a shear gradient of 100 s⁻¹.

4. The use of a melamine resin as claimed in any of claims 1 to 3 for impregnating paper.

5. A melamine resin-impregnated product which has been impregnated with the melamine resin as claimed in any of claims 1 to 3.

6. A material which has been laminated with the melamine resin-impregnated product as claimed in claim 5.

## Revendications

1. Résines de mêla mine qui conviennent à l'imprégnation du papier, qui se composent
a) de mélamine (composant a)
b) par mole de mélamine, de 1,45 à 1,70 mole de formaldéhyde (composant b) et
c) par mole de mélamine, de 0,05 à 0,1 mole d'un disulfite d'alcali ou d'une quantité équivalente, par rapport à la quantité de soufre, d'un sulfite d'alcali ou d'un hydrogénosulfite d'alcali (composant c),
qui présentent, sous forme de solution aqueuse à 55% en poids et à la température de 25°C et un gradient de cisaillement de 100 s⁻¹, une viscosité de 50 à 200 mPa•s.

2. Résines de mélamine suivant la revendication 1, que l'on peut obtenir
I) en faisant réagir un mélange de composants (a) et (b) dans de l'eau pendant au moins la durée nécessaire à la formation d'une solution présentant une température de turbidité de 40 à 60°C et
II) on mélange la solution obtenue à l'étape 1 avec le composant (c) et, au cas où le mélange présente une viscosité inférieure à 50 mPa•s, on poursuit sa réaction jusqu'à une viscosité de 50 à 200 mPa•s,
où la réaction dans l'étape (I) et l'étape (II) se déroule à une valeur de pH de 7 à 10 et à une température réactionnelle de 60 à 110°C et les indications relatives à la température de turbidité se rapportent à une teneur en solides de 12% en poids et les indications relatives à la viscosité se rapportent à une teneur en solides de 55% en poids, une température de 25°C et un gradient de cisaillement de 100 s⁻¹.

3. Procédé de préparation de résines de mélamine suivant la revendication 1 ou 2, caractérisé en ce que
I) en faisant réagir un mélange de composants (a) et (b) dans de l'eau pendant au moins la durée nécessaire à la formation d'une solution présentant une température de turbidité de 40 à 60°C et
II) on mélange la solution obtenue à l'étape 1 avec le composant (c) et, au cas où le mélange présente une viscosité inférieure à 50 mPa•s, on poursuit sa réaction jusqu'à une viscosité de 50 à 200 mPa•s,
où la réaction dans l'étape (I) et l'étape (II) se déroule à une valeur de pH de 7 à 10 et à une température réactionnelle de 60 à 110°C et les indications relatives à la température de turbidité se rapportent à une teneur en solides de 12% en poids et les indications relatives à la viscosité se rapportent à une teneur en solides de 55% en poids, une température de 25°C et un gradient de cisaillement de 100 s⁻¹.

4. Utilisation des résines de mélamine suivant les revendications 1 à 3 pour l'imprégnation du papier.

5. Produits imprégnés de résine de mélamine qui ont été imprégnés avec les résines de mélamine suivant les revendications 1 à 3.

6. Matières premières qui sont revêtues des produits imprégnés de résine de mélamine suivant la revendication 5.
